# EUROPÄISCHE PATENTSCHRIFT

(11) **EP 0 943 530 B1**
(45) Veröffentlichungstag und Bekanntmachung des Hinweises auf die Patenterteilung: **18.08.2004**
(21) Anmeldenummer: 99100932.5
(22) Anmeldetag: 20.01.1999
(51) Int. Cl.: B62D 25/20, B62D 21/10, B62D 27/04

(54) **Fahrgastzelle für einen Personenkraftwagen**
Passenger compartment of a motor vehicle
Compartiment passagers d'un véhicule automobile

(30) Priorität: 14.03.1998 DE 19811215
(43) Veröffentlichungstag der Anmeldung: 22.09.1999
(73) Patentinhaber: Dr.Ing. h.c.F. Porsche Aktiengesellschaft, 70435 Stuttgart (DE)
(72) Erfinder: Heinz, Martin, 70182 Stuttgart (DE); Brin, Constantin, 70499 Stuttgart (DE); Praznik, Franc, 71229 Leonberg (DE); Remensperger, Rolf, 88512 Mengen (DE); Herntier, Matthias, 75449 Wurmberg (DE); Oggianu, Roberto, 74708 Heilbronn (DE)

(56) Entgegenhaltungen:
- EP-A- 0 059 147
- DE-A- 19 603 098
- DE-U- 9 412 850
- DE-U- 29 714 656
- US-A- 4 529 243
- PATENT ABSTRACTS OF JAPAN vol. 1998, no. 13, 30. November 1998 (1998-11-30) & JP 10 218038 A (ITO SHIGERU), 18. August 1998 (1998-08-18)

## Beschreibung

Die Erfindung betrifft eine Fahrgastzelle für einen Personenkraftwagen mit jeweils einer B-Säule auf jeder Karosserieseite, die in einen untenliegenden Längsschweller mündet, wobei zur Erhöhung der Quersteifigkeit der Fahrgastzelle bei Seitenaufprallbelastungen eine querverlaufende, mit dem Aufbau verbundene Rohrkonstruktion vorgesehen ist, die sich aus seitlich außenliegenden aufrechten Verstärkungsrohren und einem sich über die Karosseriebreite erstreckenden, an die aufrechten Verstärkungsrohre angeschlossenen rohrförmigen Versteifungselement zusammensetzt.

Bei einer bekannten Fahrgastzelle der eingangs genannten Gattung (DE 196 03 098 A1) ist in jeder B-Säule ein zusätzliches Verstärkungsrohr integriert, wobei die beiden in den B-Säulen angeordneten Verstärkungsrohre etwa im Bereich der Höhenerstreckung der Längsschweller mit einem sich quer über die Karosseriebreite erstreckenden, an den Karosserieboden angebundenen Versteifungselement zu einer querversteifenden Rohrkonstruktion verbunden sind.

Dieser Anordnung haftet der Nachteil an, daß aufgrund des relativ tief liegenden querverlaufenden, an den Karosserieboden angebundenen Versteifungselementes und der relativ langen aufrechten Hebelarme der Verstärkungsrohre bei einer Seitenaufprallbelastung hohe Momente auftreten, so daß diese Rohrkonstruktion entsprechend stabil dimensioniert werden muß, was gewichtserhöhend wirkt.

Aufgabe der Erfindung ist es, eine Rohrverstärkung der eingangs genannten Gattung so weiterzubilden, daß bei einer Seitenaufprallbelastung eine günstigere Krafteinleitung erzielt wird, so daß die Rohrkonstruktion kleiner und somit leichtgewichtiger dimensioniert werden kann.

Erfindungsgemäß wird diese Aufgabe durch die Merkmale des Anspruchs 1 gelöst. Weitere, die Erfindung in vorteilhafter Weise ausgestaltende Merkmale beinhalten die Unteransprüche.

Die mit der Erfindung hauptsächlich erzielten Vorteile sind darin zu sehen, daß durch Anbindung jedes aufrechten Verstärkungsrohres an ein angrenzendes großflächiges Knotenblech sowie durch Abstützung des unteren Randbereiches des Knotenbleches an der Außenseite des Längsschwellers und das vom Verstärkungsrohr oberhalb des Längsschwellers nach innen geführte, mit dem äußeren Ende des rohrförmigen Versteifungselementes verbundene Stützrohr eine querversteifende Rohrkonstruktion geschaffen wird, an der bei einer Seitenaufprallbelastung wesentliche günstigere Hebelverhältnisse vorliegen, so daß eine optimierte Krafteinleitung und eine wesentliche Erhöhung der Quersteifigkeit erzielt wird.

Das querverlaufende Versteifungselement ist über einen wesentlichen Teilbereich seiner Quererstreckung versenkt in einer querverlaufenden Hohlträgerstruktur der Hintersitzanlage bzw. des Mitteltunnels angeordnet und beansprucht somit keinen zusätzlichen Bauraum. Durch das relativ hochliegende querverlaufende Versteifungselement bilden die seitlich außenliegenden aufrechten Verstärkungsrohre kurze Hebelarme bei einer Seitenaufprallbelastung. Die Knotenbleche bewirken eine großflächige Krafteinleitung bei einer Seitenaufprallbelastung.

Vorzugsweise bildet jedes Knotenblech mit dem daran befestigten aufrechten Verstärkungsrohr und dem querverlaufenden Stützrohr eine vorgefertigte Baueinheit, die dann innerhalb der Fahrgastzelle mit dem freien äußeren Ende des Versteifungselements verbunden wird. Somit können relativ große Toleranzen ausgeglichen werden. Da die Stützrohre oberhalb der Längsschweller verlaufen, werden die Längsschweller nicht geschwächt. Unterhalb eines mittleren hochgezogenen Abschnitts des Versteifungselements ist in eine Getriebebrücke ein weiteres Rohrelement integriert, so daß auch im Bereich des Mitteltunnels eine wirkungsvolle Kraftübertragung gegeben ist.

Zwei Ausführungsbeispiele der Erfindung sind in den Zeichnungen dargestellt und werden im folgenden näher erläutert.

Es zeigen
- Fig. 1: eine Teilseitenansicht auf ein durch ein Cabriolet gebildetes Kraftfahrzeug,
- Fig. 2: eine perspektivische Teilansicht von schräg vorne auf einen Längsschweller, eine aufrechte B-Säule und einen Teilbereich der Hintersitzanlage der Fahrgastzelle sowie eine erste Ausführungsform einer erfindungsgemäßen Rohrkonstruktion,
- Fig. 3: eine perspektivische Teilansicht auf die Bauteile der ersten Ausführungsform der Rohrkonstruktion sowie auf einen Längsschweller und die angrenzende Säule,

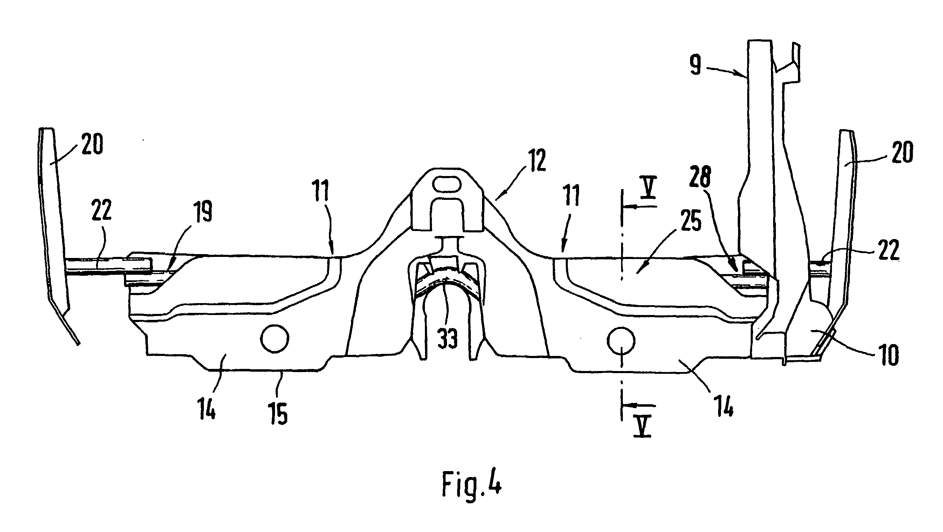

- Fig. 4: eine Ansicht von vorne auf die Rohrkonstruktion und den angrenzenden Aufbau,
- Fig. 5: einen Schnitt nach der Linie V-V der Fig. 4 in größerer Darstellung,
- Fig. 6: eine Teilseitenansicht auf ein durch ein Coupe gebildetes Kraftfahrzeug,
- Fig. 7: eine perspektivische Teilansicht auf eine zweite Ausführungsform einer querversteifenden Rohrkonstruktion und den angrenzenden Aufbau,
- Fig. 8: eine perspektivische Teilansicht auf die zweite Ausführungsform der Rohrkonstruktion und
- Fig. 9: eine Explosionsdarstellung der Bauteile der zweiten Ausführungsform der Rohrkonstruktion.

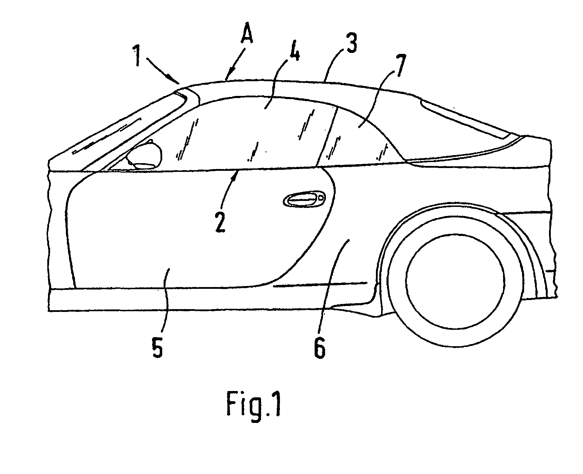

Gemäß Fig. 1 wird ein Personenkraftwagen 1 durch ein Cabriolet gebildet, das oberhalb einer Gürtellinie 2 ein von einer Schließstellung A in eine zurückgeklappte heckseitige Ablagestellung verlagerbares Verdeck 3 aufweist.

Der Personenkraftwagen 1 umfaßt eine mit einer höhenverschiebbaren Türfensterscheibe 4 versehene Seitentür 5 an, die sich nach hinten hin ein äußeres Seitenteil 6 anschließt. Angrenzend an die Türfensterscheibe 4 ist eine Fondfensterscheibe 7 angeordnet, die von einer geschlossenen Stellung nach unten in eine abgesenkte Stellung verlagerbar ist und umgekehrt.

Eine Fahrgastzelle 8 des Personenkraftwagens 1 umfaßt auf jeder Karosserieseite eine B-Säule 9, deren unteres Ende in einen untenliegenden Längsschweller 10 mündet. Bei der Cabriolet-Version setzt sich jede B-Säule 9 aus einem profilierten Außenteil 9a und einem profilierten Innenteil 9b zusammen, die bereichsweise eine Hohlträgerstruktur bilden. Das obere Ende jeder B-Säule 9 endet unterhalb der Fondseitenscheibe 7 etwa auf Höhe der Gürtellinie 2 oder etwas unterhalb davon. Zwischen den beiden beabstandeten B-Säulen 9 erstreckt sich eine Hintersitzanlage 11, die durch einen hochgezogenen Mitteltunnel 12 in zwei nebeneinanderliegende Einzelsitze unterteilt ist.

Die Hintersitzanlage 11 ist an ihrem vorderen querverlaufenden Ende 13 über ein aufrechtes Fersenblech 14 an den Mitteltunnel 12 und den darunterliegenden Fahrzeugboden 15 angeschlossen. Der Fahrzeugboden verbindet 15 die beiden seitlich außenliegenden Längsschweller 10. Nach oben wird die Hintersitzanlage 11 aufbauseitig durch eine Sitzmulde 16 begrenzt, die vorne an das Fersenblech 14 anschließt. Zur Erhöhung der Quersteifigkeit der Fahrgastzelle 8 bei einer Seitenaufprallbelastung ist eine querversteifende Rohrkonstruktion 17 vorgesehen, die sich aus zwei seitlich außenliegenden aufrechten Verstärkungsrohren 18 und einem sich über die Karosseriebreite erstreckenden, rohrförmigen Versteifungselement 19 zusammensetzt.

Erfindungsgemäß ist jedes aufrechte Verstärkungsrohr 18 an ein angrenzendes relativ großflächiges Knotenblech 20 angebunden, wobei durch dieses Knotenblech 20 eine großflächige Krafteinleitung bei einer Seitenaufprallbelastung gewährleistet ist.

Ein unterer Endbereich 21 jedes Knotenbleches 20 umgibt abschnittsweise die Außenseite des Längsschwellers 10 und ist an diesem befestigt (beispielsweise durch Schweißen). Somit stützt sich der untere Endbereich 21 jedes Knotenbleches 20 am Längsschweller 10 ab. Unmittelbar oberhalb der Höhenerstreckung des Längsschwellers 10 ist vom aufrechten Verstärkungsrohr 18 ein nach innen ragendes Stützrohr 22 weggeführt, das im Bereich der Fahrgastzelle 8 jeweils mit dem äußeren Ende 23 des querverlaufenden rohrförmigen Versteifungselementes 19 starr verbunden ist. Das Knotenblech 20 mit dem daran befestigten aufrechten Verstärkungsträger 18 und dem querverlaufenden Stützrohr 22 bilden eine Vormontageeinheit.

Gemäß der ersten Ausführungsform weist das Knotenblech 20 oberhalb des Längsschwellers 10 eine aufrechte, nach außen hin offene Rinne 24 auf, in die das aufrechte Verstärkungsrohr 18 eingesetzt ist.

Das Verstärkungsrohr 18 wird im Ausführungsbeispiel durch ein hohles Vierkantrohr gebildet, das abschnittsweise mit dem Knotenblech 20 verschweißt ist. Das Vierkantrohr ist am oberen und unteren Ende abgeschrägt. Die Außenseite des Vierkantrohres fluchtet etwa mit den angrenzenden Wandabschnitten des Knotenbleches 20. Im Anschlußbereich des querverlaufenden Stützrohres 22 ist das Knotenblech 20 örtlich ausgeschnitten. Das äußere Ende des Stützrohres 22 ist mit dem Verstärkungsrohr 18 verschweißt. Das Knotenelement 20 ist der weiter innenliegend angeordneten B-Säule 9 vorgelagert und verläuft mit geringem Abstand zum äußeren Seitenteil 6. Ferner erstreckt sich das Knotenelement 20 - in Höhenrichtung gesehen - nicht bis zur Gürtellinie 2 hoch, sondern endet unterhalb etwa in Höhe der Oberkante einer Barriere.

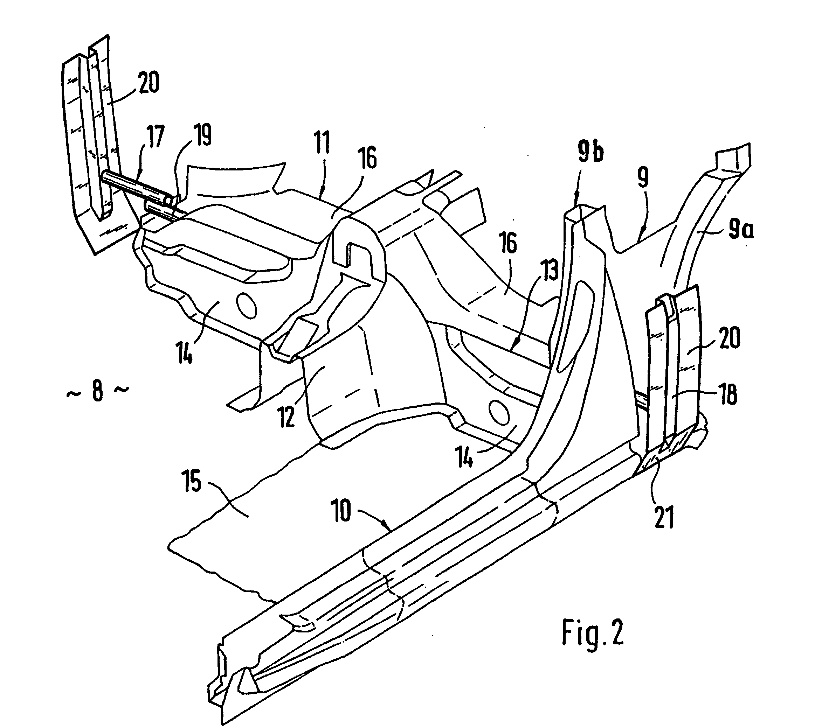

Die Stützrohre 22 werden gemäß Fig. 2 durch zwei kurze gerade Rohre gebildet, die etwa horizontal ausgerichtet sind und sich in Fahrzeugquerrichtung erstrecken. Beide Stützrohre 22 sind bereichsweise durch die weiter innenliegende B-Säule 9 in horizontaler Richtung hindurchgeführt und überragen die jeweilige B-Säule 9 nach innen hin.

Das querverlaufende rohrförmige Versteifungselement 19 ist an seinen beiden äußeren Enden entweder direkt oder über nicht näher dargestellte aufgesetzte Verbindungslaschen mit dem überlappenden Stützrohr 22 durch Schweißen verbunden. Das Versteifungselement 19 verläuft über einen wesentlichen Teil seiner Quererstreckung versenkt in einem querverlaufenden Hohlraum 25 der Hintersitzanlage 11 bzw. des Mitteltunnels 12.

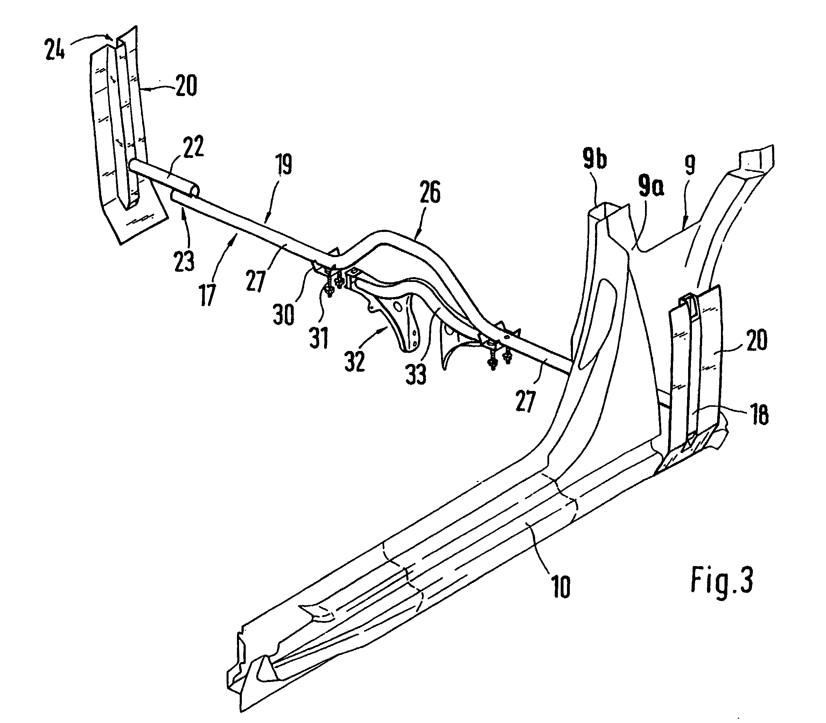

Gemäß Fig. 3 setzt sich das Versteifungselement 19 aus einem mittleren hochgezogenen Abschnitt 26 und zwei querverlaufenden, etwa horizontalen Abschnitten 27 zusammen. Lediglich in den beiden äußeren Verbindungsbereichen 28 ist das Versteifungselement 19 frei zugänglich.

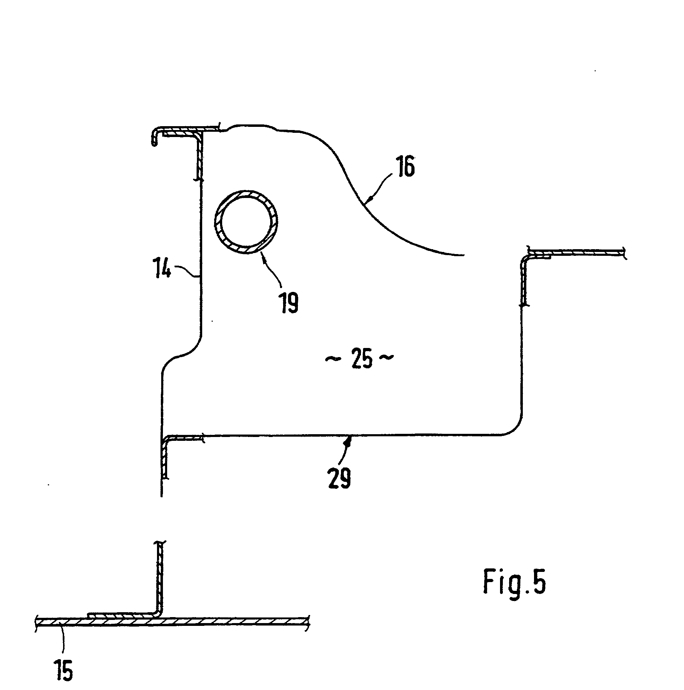

Der querverlaufende Hohlraum 25 wird im Bereich der Hintersitzanlage 11 durch das vordere aufrechte Fersenblech 14, die obenliegende Sitzmulde 16 und ein unteres Schließblech 29 gebildet, das an das Fersenblech 14 und die Unterseite der Sitzmulde 16 angeschlossen ist (Fig. 5).

Beiderseits des hochgezogenen Abschnitts 26 sind an der Unterseite der querverlaufenden horizontalen Abschnitte 27 des Versteifungselementes 19 Halter 30 mit einem oder mehreren, nach unten ragende Stehbolzen 31 angeschweißt, wodurch das Versteifungselement 19 an der Sitzmulde 16 der Hintersitzanlage 11 festschraubbar ist. Auch im Bereich des Mitteltunnels 12 verläuft das Versteifungselement 19 versenkt in einem Hohlraum, der durch den Mitteltunnel 12 und einen aufgesetzten Abschnitt der Sitzmulde 16 gebildet wird.

Zur weiteren Versteifung der Fahrgastzelle 8 ist unterhalb des Mitteltunnels 12 an einer querverlaufenden Getriebebrücke 32 ein weiteres gebogenes Rohrelement 33 integriert, durch welches der Mitteltunnel 12 zusätzlich versteift wird. Das Rohrelement 33 ist fest mit dem oberen Rand der Getriebebrücke 32 verbunden. Die Getriebebrücke 32 ist getrennt und entfernt vom Versteifungselement 19 am Aufbau befestigt.

Im Ausführungsbeispiel liegt das Stützrohr 22 oberhalb des Versteifungselements 19 und beide Bauteile 19, 22 fluchten in der Draufsicht gesehen. Beide Bauteile 19, 22 könnten jedoch auch auf gleicher Höhe verlaufen und hintereinanderliegend angeordnet sein. Das Stützrohr 22 und das Versteifungselement 19 überlappen sich abschnittsweise. Die Verbindung Stützrohr 22 zu Versteifungselement 19 erfolgt zum Ausgleich von Toleranzen erst im Fahrzeug und zwar innerhalb der Fahrgastzelle 8.

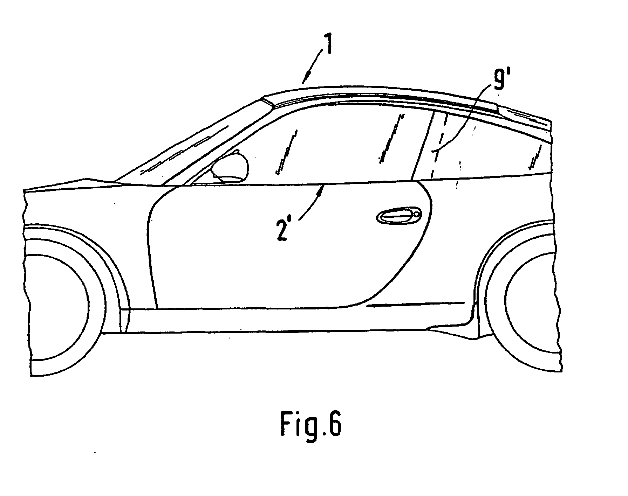

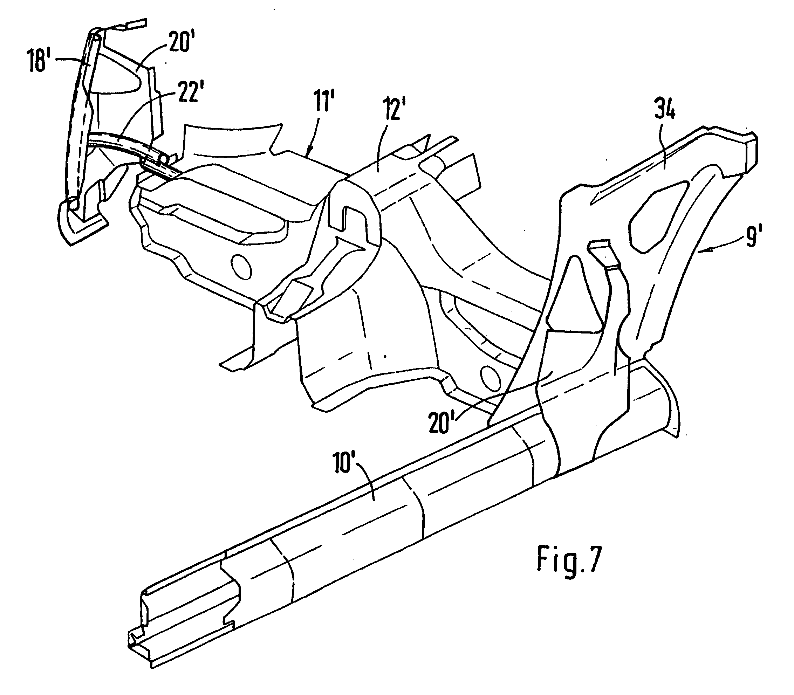

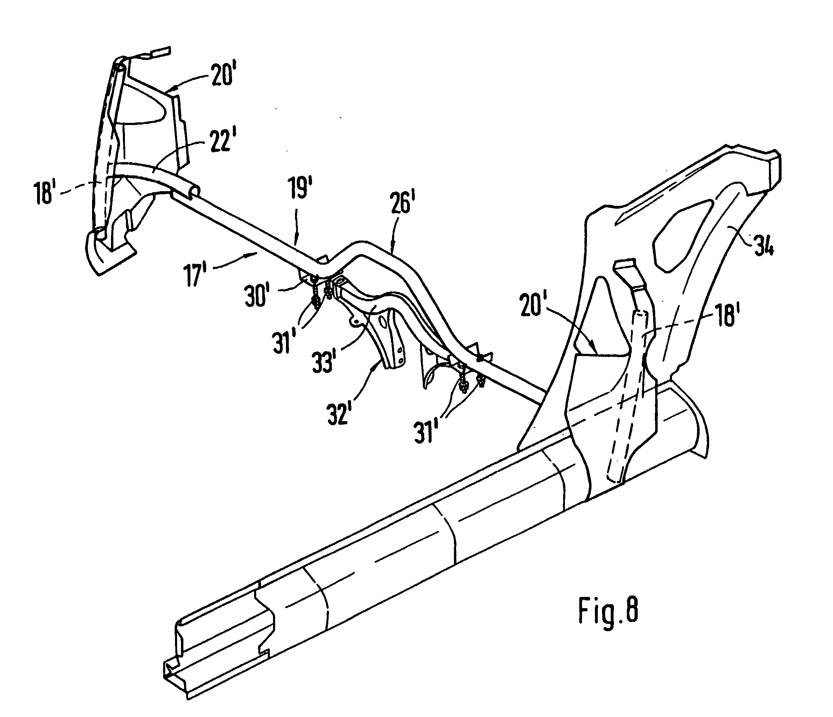

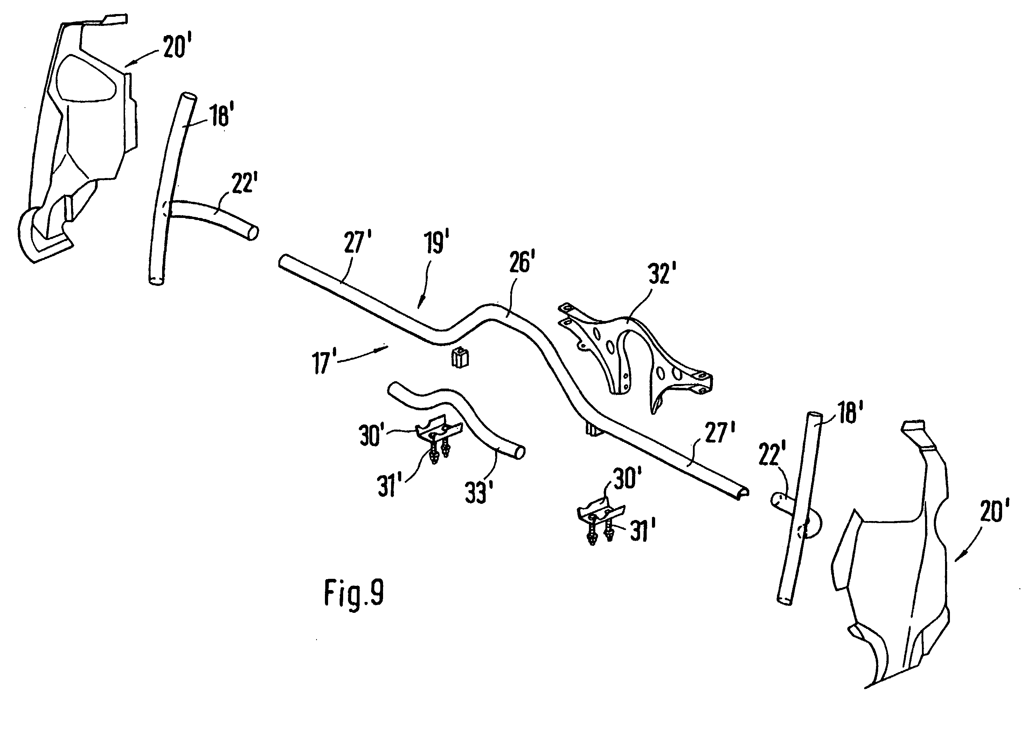

In den Fig. 6 bis 9 ist eine querversteifende Rohrkonstruktion 17' für eine weitere Ausführungsform eines Personenkraftwagens, nämlich eine Coupe-Version mit geschlossenem Dach, dargestellt, wobei die Fahrgastzelle 8 bis auf die Gestaltung der B-Säule 9' identisch zur ersten Ausführungsform ausgebildet ist. Die B-Säule 9' weist bei der Coupe-Version nur ein einziges vom Längsschweller 10' hochgezogenes Stegblech 34 auf, das sich etwa bis zur Gürtellinie 2' hoch erstreckt. Oberhalb der Gürtellinie 2' verläuft eine aufrechte Hohlträgerkonstruktion, deren oberer Rand an den oberen Dachrahmen angeschlossen ist. Die querversteifende Rohrkonstruktion 17' bei der Coupe-Version ist im Bereich des querverlaufenden Versteifungselementes 19' identisch ausgebildet wie bei der Cabrio-Version.

Bei der Coupe-Version ist ein aufrechtes, schrägverlaufendes Verstärkungsrohr 18' von einem äußeren Knotenblech 20' umgeben, wobei das Verstärkungsrohr 18' mit dem Knotenblech 20' verschweißt ist. Das Knotenblech 20' umgibt abschnittsweise die Außenseite des Längsschwellers 10' und ist mit diesem fest verbunden. Das Knotenblech 20' ist oberhalb des Längsschwellers 10' mittels randseitiger Flansche an die Außenkontur des stehenden Stegbleches 34 herangeführt und ist mit diesem verschweißt. Das Knotenblech 20' erstreckt sich nur in einem unteren Teilbereich der Höhe der B-Säule 9'.

Vom innenliegenden Verstärkungsrohr 18' ist ein bügelförmig gebogenes Stützrohr 22' oberhalb des Längsschwellers 10' nach innen geführt, wobei das Stützrohr 22' und das Versteifungselement 19' genauso miteinander verbunden werden wie bei der eingangs beschriebenen Rohrkonstruktion 17. Das Stützrohr 22' ist bei dieser Ausführung nach vorne hin gebogen, da das aufrechte Verstärkungsrohr 18' - in Längsrichtung gesehen - einen Versatz zum querverlaufenden Versteifungselement 19' aufweist.

Mit beiden Rohrkonstruktionen 17,17' wird eine deutlich erhöhte Quersteifigkeit der Fahrgastzelle 8, 8' bei einer Seitenaufprallbelastung erzielt und die Eindringgeschwindigkeit der Fahrzeugaußenseite in die Fahrgastzelle 8, 8' wird verringert.

## Patentansprüche

1. Fahrgastzelle für einen Personenkraftwagen mit jeweils einer B-Säule (9) auf jeder Karosserieseite, die in einen untenliegenden Längsschwelle (10, 10') mündet, wobei zur Erhöhung der Quersteifigkeit der Fahrgastzelle bei Seitenaufprallbelastungen eine querversteifende Rohrkonstruktion vorgesehen ist, die sich aus zwei seitlich außenliegenden, aufrechten Verstärkungsrohren (18, 18') und einem sich über die Karosseriebreite erstreckenden, rohrförmigen Versteifungselement (19, 19') zusammensetzt, **dadurch gekennzeichnet, daß** jedes aufrechte Verstärkungsrohr (18, 18') an ein angrenzendes Knotenblech (20, 20') angebunden ist, dessen unterer Randbereich sich an der Außenseite des Längsschwellers (10, 10') abstützt und daß von jedem Verstärkungsrohr (18, 18') oberhalb der Höhenerstreckung des Längsschwellers (10, 10') ein nach innen ragendes Stützrohr (22, 22') weggeführt ist, das im Bereich der Fahrgastzelle (8, 8') jeweils mit dem äußeren Ende des querverlaufenden rohrförmigen Versteifungselementes (19, 19') starr verbunden ist.

2. Fahrgastzelle nach Anspruch 1, **dadurch gekennzeichnet, daß** das querverlaufende rohrförmige Versteifungselement (19, 19') an seinen beiden äußeren Enden (23, 23') entweder direkt oder mittels Verbindungslaschen mit dem überlappenden Stützrohr (22, 22') fest verbunden ist.

3. Fahrgastzelle nach Anspruch 1, **dadurch gekennzeichnet, daß** das Versteifungselement (19, 19') über einen wesentlichen Teil seiner Quererstreckung versenkt in einem querverlaufenden Hohlraum (25, 25') der Hintersitzanlage (11) bzw. des Mitteltunnels (12) verläuft.

4. Fahrgastzelle nach den Ansprüchen 1 und 3, **dadurch gekennzeichnet, daß** das Versteifungselement (19, 19') im Bereich des Mitteltunnels (12) einen hochgezogenen Abschnitt (26) aufweist.

5. Fahrgastzelle nach Anspruch 4, **dadurch gekennzeichnet, daß** beiderseits des hochgezogenen Abschnitts ((26) des Versteifungselements (19, 19') an dessen Unterseite angeschweißte Halter ((30) mit aufrechten, nach unten ragenden Stehbolzen ((31) vorgesehen sind, wobei das Versteifungselement (19, 19') an der Hintersitzanlage (11) festlegbar ist.

6. Fahrgastzelle nach einem oder mehreren der vorangegangenen Ansprüche, **dadurch gekennzeichnet, daß** unterhalb des hochgezogenen Abschnitts (26) des Versteifungselementes (19, 19') an einer querverlaufenden Getriebebrücke (32) ein integriertes Rohrelement (33) vorgesehen ist.

7. Fahrgastzelle nach Anspruch 1, **dadurch gekennzeichnet, daß** das aufrechte Verstärkungsrohr (18, 18'), das Knotenblech (20, 20') und das nach innenragende Stützrohr (22, 22') eine Vormontageeinheit bilden, die zumindest mit dem Längsschweller (10, 10') und dem querverlaufenden Versteifungselement (19, 19') verbindbar ist.

8. Fahrgastzelle nach Anspruch 1, **dadurch gekennzeichnet, daß** das aufrechte Verstärkungsrohr (18') an der Innenseite des Knotenblechs (20') angeschweißt ist und daß vom Verstärkungsrohr (18') ein etwa horizontal verlaufendes gebogenes Stützrohr (22') zum in Fahrtrichtung weiter hintenliegenden querverlaufenden Versteifungselement (19') weggeführt ist.

9. Fahrgastzelle nach Anspruch 8, **dadurch gekennzeichnet, daß** das Knotenblech (20') örtlich an ein aufrechtes Stegblech (34) der B-Säule (9') herangeführt und mit diesem örtlich verbunden ist.

10. Fahrgastzelle nach Anspruch 1, **dadurch gekennzeichnet, daß** am Knotenblech (20) eine aufrechte, etwa U-förmig profilierte, nach außen hin offene Rinne (24) ausgebildet ist, in die das aufrechte Verstärkungsrohr (18) eingesetzt und fest mit dem Knotenblech (20) verbunden ist.

11. Fahrgastzelle nach Anspruch 10, **dadurch gekennzeichnet, daß** das aufrechte Verstärkungsrohr (18) einen rechteckförmigen oder quadratischen Querschnitt aufweist.

12. Fahrgastzelle nach einem oder mehreren der vorangegangenen Ansprüche, **dadurch gekennzeichnet, daß** das Knotenblech (20) außerhalb der B-Säule (9) und zwar benachbart eines Seitenteiles (6) des Aufbaus verläuft und daß das querverlaufende horizontale Stützrohr (22) durch die weiter innenliegende B-Säule (9) hindurchgeführt ist.

## Claims

1. A passenger compartment for a passenger car with a respective B-pillar (9) on each side of the bodywork, which opens into a longitudinal sill (10, 10') situated below, wherein a transversely reinforcing tubular structure, which is formed by two upright reinforcement tubes (18, 18') situated laterally on the outside and one tubular reinforcement element (19, 19') extending over the width of the bodywork, is provided in order to increase the transverse rigidity of the passenger compartment in the event of lateral-impact stressing, **characterized in that** each upright reinforcement tube (18, 18') is attached to an adjacent gusset plate (20, 20'), the lower edge region of which is supported on the outside of the longitudinal sill (10, 10'), and a supporting tube (22, 22'), which projects towards the inside and which is rigidly connected in the region of the passenger compartment (8, 8') to the outer end of the transversely extending tubular reinforcement element (19, 19') in each case, extends away from each reinforcement tube (18, 18') above the vertical extension of the longitudinal sill (10, 10').

2. A passenger compartment according to Claim 1, **characterized in that** the transversely extending tubular reinforcement element (19, 19') is firmly connected at its two outer ends (23, 23') to the overlapping supporting tube (22, 22') either directly or by means of connecting plates.

3. A passenger compartment according to Claim 1, **characterized in that** the reinforcement element (19, 19') extends recessed in a transversely extending cavity (25, 25') in the rear-seat unit (11) or the central tunnel (12) respectively over a substantial part of its transverse extension.

4. A passenger compartment according to Claims 1 and 3, **characterized in that** the reinforcement element (19, 19') has a raised portion (26) in the region of the centre tunnel (12).

5. A passenger compartment according to Claim 4, **characterized in that** retaining means (30) welded onto the underside of the reinforcement element (19, 19') and having upright, downwardly projecting stud bolts (31) are provided on both sides of the raised portion (26) of the reinforcement element (19, 19'), wherein the reinforcement element (19, 19') is capable of being fixed to the rear-seat unit (11).

6. A passenger compartment according to one or more of the preceding Claims, **characterized in that** below the raised portion (26) of the reinforcement element (19, 19') an integrated tubular element (33) is provided on a transversely extending gearbox cross member (32).

7. A passenger compartment according to Claim 1, **characterized in that** the upright reinforcement tube (18, 18'), the gusset plate (20, 20') and the inwardly projecting supporting tube (22, 22') form a pre-assembly unit which is capable of being connected at least to the longitudinal sill (10, 10') and the transversely extending reinforcement element (19, 19').

8. A passenger compartment according to Claim 1, **characterized in that** the upright reinforcement tube (18') is welded onto the inside of the gusset plate (20'), and a curved supporting tube (22') extending substantially horizontally extends away from the reinforcement tube (18') towards the transversely extending reinforcement element (19') situated further towards the rear in the direction of travel.

9. A passenger compartment according to Claim 8, **characterized in that** the gusset plate (20') extends locally to an upright web plate (34) of the B-pillar (9') and is connected locally to the latter.

10. A passenger compartment according to Claim 1, **characterized in that** an upright channel (24), which has a substantially U-shaped profile and is open towards the outside and into which the upright reinforcement tube (18) is inserted and is connected firmly to the gusset plate (20), is formed on the gusset plate (20).

11. A passenger compartment according to Claim 10, **characterized in that** the upright reinforcement tube (18) has a rectangular or square cross-section.

12. A passenger compartment according to one or more of the preceding Claims, **characterized in that** the gusset plate (20) extends outside the B-pillar (9), namely adjacent to a lateral part (6) of the body, and the transversely extending horizontal supporting tube (22) extends through the B-pillar (9) situated further towards the inside.

## Revendications

1. Habitacle pour un véhicule automobile comportant un montant B (9) respectivement de chaque côté de la carrosserie, lequel débouche dans un bas de caisse longitudinal (10, 10') disposé en dessous, une structure tubulaire transversale étant prévue pour accroître la raideur transversale de l'habitacle en cas de charges d'impact latéral, la structure tubulaire se composant de tubes de renforcement droits (18, 18') disposés latéralement à l'extérieur et d'un élément de raidissement tubulaire (19, 19') s'étendant au-delà de la largeur de la carrosserie, **caractérisé en ce que** chaque tube de renforcement droit (18, 18') est relié à un gousset d'assemblage (20) adjacent dont la zone de bordure inférieure s'appuie contre le côté extérieur du bas de caisse (10, 10') et qu'un tube support (22, 22') pointant vers l'intérieur est emmené au-dessus de l'extension verticale du bas de caisse longitudinal (10, 10') à partir de chaque tube de renforcement (18, 18'), le tube support étant à chaque fois relié de façon rigide à l'extrémité extérieure de l'élément de raidissement tubulaire transversal (19, 19') dans la zone de l'habitacle (8, 8').

2. Habitacle selon la revendication 1, **caractérisé en ce que** l'élément de raidissement tubulaire transversal (19, 19') est relié fixement au tube support (22, 22') le recouvrant au niveau de ses deux extrémités extérieures (23, 23'), soit directement soit par l'intermédiaire d'éclisses de raccordement.

3. Habitacle selon la revendication 1, **caractérisé en ce que** l'élément de raidissement transversal (19, 19') s'étend sur une partie principale de son extension transversale enfoncée dans un espace creux (25, 25') transversal du siège arrière (11) et/ ou du tunnel central (12).

4. Habitacle selon les revendications 1 et 3, **caractérisé en ce que** l'élément de raidissement (19, 19') présente un segment bombé (26) dans la zone du tunnel central (12).

5. Habitacle selon la revendication 4, **caractérisé en ce que** des deux côtés du segment (26) bombé de l'élément de raidissement (19,19'), des supports (30) soudés à son côté inférieur et dotés de boulons d'entretoisement (31) droits, pointant vers le bas, sont prévus, l'élément de raidissement (19, 19') pouvant être fixé au siège arrière (11).

6. Habitacle selon une ou plusieurs des revendications précédentes, **caractérisé en ce qu'**un élément tubulaire (33) intégré est prévu en dessous du segment (26) bombé de l'élément de raidissement (19, 19') au niveau d'un pont de transmission (32) transversal.

7. Habitacle selon la revendication 1, **caractérisé en ce que** le tube de renforcement droit (18, 18'), le gousset d'assemblage (20, 20') et le tube support (22, 22') pointant vers l'intérieur forment une unité de prémontage pouvant être reliée au moins au bas de caisse longitudinal (10, 10') et à l'élément de raidissement (19, 19') transversal.

8. Habitacle selon la revendication 1, **caractérisé en ce que** le tube de renforcement droit (18') est soudé à l'intérieur du gousset d'assemblages (20') et qu'un tube support (22') plié s'étendant approximativement horizontalement est emmené depuis le tube de renforcement (18') vers l'élément de raidissement (19') transversal disposé encore plus en arrière.

9. Habitacle selon la revendication 8, **caractérisé en ce que** le gousset d'assemblage (20') est ponctuellement introduit au niveau d'une plaque d'âme (34) droite du montant B (9') et y est ponctuellement relié.

10. Habitacle selon la revendication 1, **caractérisé en ce qu'**on configure une rainure (24) droite, ouverte vers l'extérieur, profilée approximativement en U, dans laquelle on place le tube de renforcement (18) droit avant de le relier fixement au gousset d'assemblage (20).

11. Habitacle selon la revendication 10, **caractérisé en ce que** le tube de renforcement (18) droit présente une section rectangulaire ou carrée.

12. Habitacle selon l'une quelconque des revendications précédentes, **caractérisé en ce que** le gousset d'assemblage (20) s'étend en dehors du montant B (9) et notamment à proximité d'une partie latérale (6) de la structure et que le tube support (22) horizontal transversal est introduit à travers le montant B (9) disposé plus à l'intérieur.
